# EUROPEAN PATENT SPECIFICATION

(11) **EP 0 408 379 B1**
(45) Date of publication and mention of the grant of the patent: **29.12.1993**
(21) Application number: 90307675.0
(22) Date of filing: 13.07.1990
(51) Int. Cl.: B23B 29/034, B28D 1/14

(54) **Improvements in drills**
Bohrer
Forets

(30) Priority: 14.07.1989 GB 8916171; 16.10.1989 GB 8923279
(43) Date of publication of application: 16.01.1991
(73) Proprietor: Payne, David Patrick, Surbiton Surrey KT5 8QD (GB)
(72) Inventor: Payne, David Patrick, Surbiton Surrey KT5 8QD (GB)
(74) Representative: Alexander, Thomas Bruce

(56) References cited:
- EP-A- 0 008 622
- EP-A- 0 043 000
- DE-A- 3 300 470
- GB-A- 2 157 207
- GB-A- 2 184 962

## Description

The invention relates to improvements in drills for undercutting holes (EP-A- 43 000).

Many building components such as walls, roofs etc. are required to support some form of fixing, such as a bolt or an anchor. Many such fixings are used nowadays which have an expanding sleeve or skirt, which, once the fixing is inserted into a bore in the building component, is then expanded. Expanding fixings are advantageous in that they provide an increase in the bearing strength of the fixing for a smaller contact area. Thus the fixing may be more securely fixed or a shorter fixing and shallower hole may be used.

The main disadvantage of such fixings lie in that there is only a small area of actual contact between the fixing and the walls of the bore in which it is affixed.

Some drills are now available which are capable of forming an undercut or cavity within the bore below the surface of the component. When a fixing is expanded in an undercut bore, there is a far greater area of contact between the fixing and the walls of the bore and it is far more secure.

Applicant's published patent application GB-A-2184962 describes an expansible drill for forming an undercut. The drill disclosed in this document comprises a cylinder having an incorporated cutting edge at one end. The end of the cylinder is slotted and can be expanded by tightening a nut on the end of the central shaft sticking out of the bore. This forces a frusto-conical wedge inside the slotted end of the cylinder causing it to expand radially.

The problem with this drill is that whilst it functions extremely well it is expensive to produce.

GB-B-2157207 also discloses an undercutting drill. Again in this drill the blades carrying the cutting teeth are flexible and are forced to expand radially as the body of the drill is forced over the conical guide. The latter is effected by pushing the drill against the bottom of the bore so that the guide, which is movable axially relative to the drill body, can move no further and the blades thus slide over the guide sides and consequently are expanded. Alternatively, a collar is described which bears on the outer surface of the material having the bore. The collar is fixed to the lower half of the drill body, whilst the upper half is movable relative thereto in an axial direction.

The retraction of this drill relies on the recovery of the blades which have been forced to expand. If this were not to happen, perhaps due to fatigue or excessive friction the drill would be useless. Additionally the bore would probably be wrecked whilst trying to extract the useless drill. It has been found that the drill is also difficult to use because of the force required to expand the blades. The friction caused by the blades moving over the cruciform guide is quite substantial and prevents ease of use. Also the length of the drill required to ensure that that upper and lower parts of the drill body are movable relative to each other make the drill cumbersome and difficult to use.

It is an object of the present invention to provide an improved drill for forming an undercut in a cylindrical bore which substantially overcomes these disadvantages.

EP-A1-0043000 discloses a bore undercutting tool. In this tool the blades are forced to expand radially and the drill is pushed downwardly into its barrel. A cutter feed cam forces the cutting arm outwards as it moves along the arm. The drill and barrel are pinned together so that they rotate together. A disadvantage with such a drill is that it is necessary to use force to ensure that the drill expands, which when drilling hard materials can be substantial. It is also sometimes difficult to ensure that the arms are properly retracted before withdrawal from the bore.

According to the present invention there is provided an expansible drill for undercutting holes comprising a drill body, at least one radially extending arm attached at one end by hinge means to the drill body such that the arm is pivotable radially outwards, cutting means formed on said arm, guide means for moving said arm radially outwards, said guide means being movable axially relative to said drill body, the guide means comprising a shank portion and a frusto-conical wedge means, means for holding the arm in contact with the guide means and means for moving the guide means axially relative to the drill, wherein the arm is caused to pivot radially outwards forming an increasing cutting diameter as said arm moves along the divergent surface of the guide means, characterised in that the guide means and drill body are free to rotate relative to each other and the means for moving the guide means axially relative to the drill comprise co-operating engagement means, one element of which is located on the guide means and another on the drill body, at least one element of which engagement means is a screw thread.

The invention thus provides a drill which is easy to use and less prone to damage than known drills and cheaper and easier to produce. The arms are not subject to fatigue and the arms are extendable without too much force.

Preferably there are a pair of arms oppositely disposed within slots cut axially in said end of the drill body.

The increased number of arms makes the cutting operation faster and easier.

Preferably the guide means is axially movable within a bore in the drill body. This makes for a compact and easy to use tool.

Preferably the rotation preventing means include means for increasing the friction between the end of the guide means and a blind end of a hole being undercut and the friction increasing means may comprise at least one bar projecting from the end of the guide means.

The means for moving the guide means axially relative to the drill body are preferably tooth means formed on an inner surface of said arm or arms and thread means formed on a frustoconical wedge, the tooth means being held in engagement with the thread means.

Alternatively, the means for moving the guide means may comprise thread means formed on the inner surface of the drill body and co-operating thread means formed on the shank portion of the guide means in engagement with the aforementioned thread means.

Advantageously little force is required to be applied manually to cause the arm(s) to expand. The force needed comes from the operation of the screw threads. The drills are therefore very useful for reversible drills and to retract the arms simple reversal of the drill driving means is all that is required.

A preferred embodiment of the present invention will now be described, by way of example only, with reference to the accompanying drawings, in which:
Figure 1 is a side view of an improved undercutting drill in a retracted position;
Figure 2 is a vertical sectional side view of the drill of Figure 1 in an extended position;
Figure 3 is an end view of the drill of Figure 1 in a retracted position;
Figure 3a is a side sectional view of the drill of Figure 1 on the line IIIa-IIIa;
Figure 4 is an end view of the drill of Figure 1 with the means for extending the drill teeth removed;
Figures 5 and 6 are perspective views of the means for extending the drill teeth of the drill of Figure 1;
Figure 7 is a side view of the means for extending the drill bits of the drill of Figure 1 shown in engagement with the drill teeth;
Figure 8 is a part vertical sectional side view of an alternate undercutting drill in a retracted position; and
Figure 9 is a plan view of an alternate undercutting drill in a retracted position.

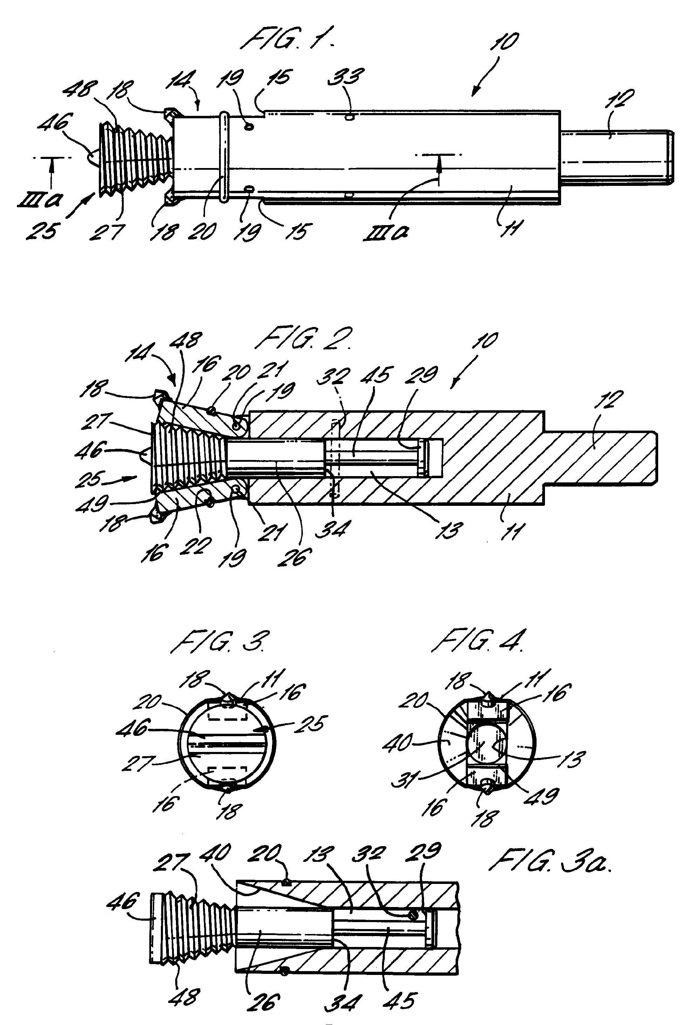

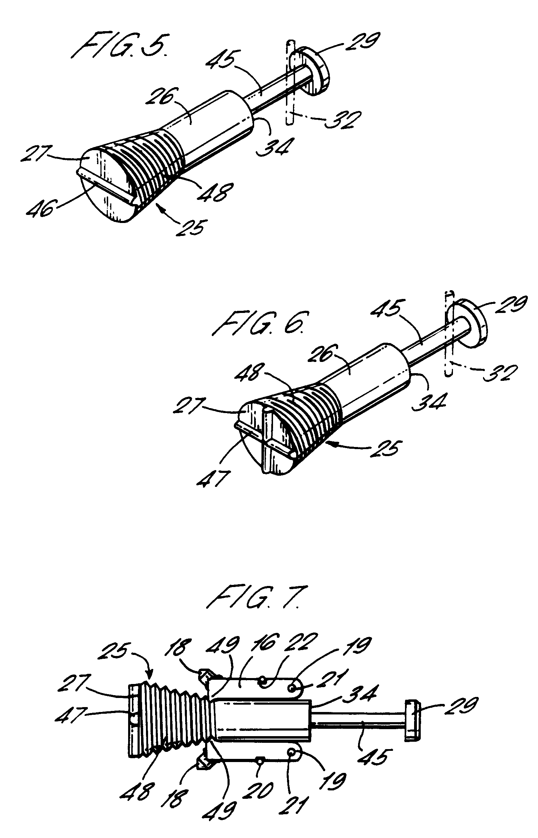

Referring first to Figure 1 there is shown an undercutting drill 10, which is particularly useful for reverse drills, in a retracted position. The drill 10 comprises a generally cylindrical body 11. The drill body 11 has a central blind bore 13, which is open at one end and extends along most of its length, as shown in Figure 2. At one end of the body 11 there is provided a shank of reduced diameter 12. This shank 12 provides the means with which the drill 10 is connected with the driving apparatus (not shown) to rotate the drill 10. The bore 13 stops before it reaches the shank 12 to prevent weakening of the overall drill 10.

At an opposite end of the drill body 11 to the shank 12 is the cutting end 14. In this end 14 of the drill body 11 are formed one or more axial slots 15. Positioned within each slot 15 and hinged to the drill body 11 is an arm 16. The hinge can be any suitable means, such as a coaxial hole 19 drilled through the drill body 11 and through the arms 16 with a pin 21 pushed through the hole 19. The hinges 19, 21 allow one end of the arms to swing out radially in an arc. The arms 16 are generally rectangular in cross section and are substantially the same length as the slots 15. At the opposite end of the arms 16 to the hinges 19, 21 are formed cutting teeth 18. The number of arms does not need to be limited to two; Figure 8 shows an embodiment incorporating three arms 52 in appropriate slots. The cutting teeth 53 of Figure 8 and Figure 9 are also different from those previously described. They are formed as part of the arms 52 by cutting the material away at an appropriate angle.

A rubber 'O' ring 20, or any other suitable means, is used to prevent the arms 16 from swinging out of their own accord. The ring 20 generally restrains the arms 16 so that the inner edges of the arms 16 are held in contact with the guide means 25 described below. The ring 20 must be of a suitable material which allows the arms 16 to be extended when a suitable force is applied as shown in Figure 2, but which easily recovers its original position when the force is removed to cause the arms 16 to retract again as shown in Figure 1. The ring 20 may sit in a groove 22 in the surface of the drill body 11. In an alternative embodiment the rubber 'O' ring 20 may be replaced by a metal circlip which is capable of expanding and retracting.

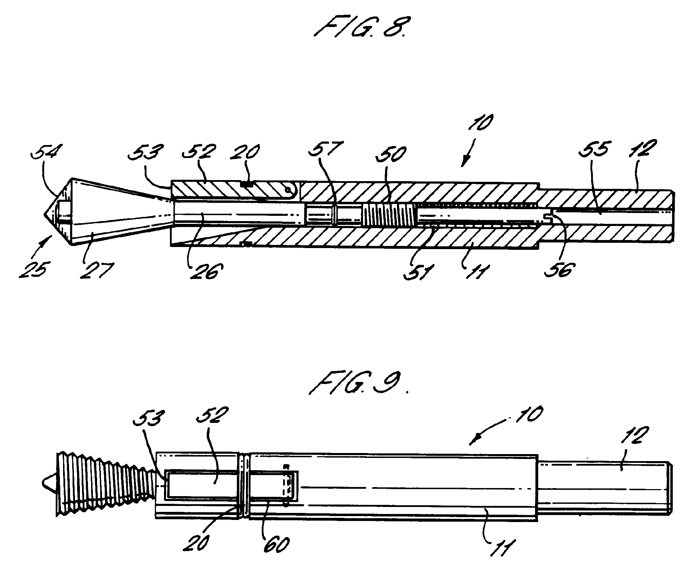

The drill 10 also has guide means 25 for extending the arms 16. The guide means 25 comprise a single body having a shank 26 at one end of which is a frustoconical wedge 27. The outer surface of the frustoconical wedge 27 has a shallow helical screw thread 48 cut therein. On the inner surfaces of the arms 16 are formed teeth 49 which engage the thread 48 as shown in figure 7. The shank 26 has a portion of reduced diameter 45 extending along a part of the shank's length only. At an opposite end of the shank 26 to the cone 27 the shank 26 has a portion of increased diameter 29 and a portion of reduced diameter 45 as shown in Figures 5, 6 and 7. This diameter is chosen to allow the extending means 25 to rotate relative to the drill body 11 when the pin 32 is in position as well as governing the constraints of axial movement.

The shank 26 is retained within the bore 13 by means of a pin 32 which passes through a hole 33 in the drill body 11 from one side to the other, past the reduced diameter portion 45 of the shank 26.

The pin 32 allows the guide means 25 to move axially relative to the drill body 10. The shank 26 is movable axially within the bore 13 until the pin 32 comes into contact with the projection 29 at the one end of the shank 26 or the step 34 formed where the reduced diameter portion 45 of the shank 26 ends, see Figure 3a. When the shank 26 is moved to the end of its available outward travel the wedge 27 protrudes from the end of the drill body 11. As the arms 16 are constrained by the ring 20 they are pulled against the shank 26 in this position which is of a size to allow them to retract into the slot 15. When the shank 26 is moved to the end of its available inward travel the cone 27 is contained fully within the cutting end 14 of the drill body 11. Because the arms 16 are held in contact with the guide 25, as the wedge 27 moves further inside the drill body 11 so the arms 16 follow the shape of the guide 27 and swing radially outwards to an extended position.

To prevent rotation of the guide means 25 there is located at the end of the extending means 35 a friction bar 46 as shown in Figures 1 to 5. Alternatively a plurality of bars 47 may be used as shown in Figure 6 or any other combination which serves the same purpose which is described below.

The inner surface 40 of the drill body 11 at the cutting end 14 is tapered as shown in Figures 3a and 4 so that only the arms 16 contact the guide 25 when it is moved in and out of the drill body 11. The resulting clearance between the inner surface 40 and the guide 27 ensures minimum friction and interference between component parts of the drill 10 during the undercutting process.

In operation a cylindrical hole is first drilled in the building component using standard equipment. The drill 10 is then connected to the power driving means which firmly clamps the shank 12. The drill 10 is inserted in the hole until the friction bar(s) 46, 47 on the end of the cone 27 contacts the blind end of the hole.

When the drill 10 is rotated only sufficient force need be applied to the drill 10 to enable the bar 46 or bars 47 to grip the material in which the bore is drilled to prevent the extending means 25 from rotating with the drill 10. As this results in relative rotation between the drill 10 and the guide means 25, the teeth 49 on the arms 16 travel along the screw thread 48 thus causing the wedge 27 to be drawn up within the cutting end 14 of the drill body 11. This in turn causes the arms 16 to swing outwards to the extended position to cut a conical shaped undercut.

When the drill 10 is to be withdrawn from the bore, the driving means must be reversed to drive the drill 10 in the reverse direction. This causes the teeth 49 to follow the screw thread 48 in the opposite direction and to effectively unscrew the cone 27 to allow it to return to a position protruding from the drill body 11. The ring 20 is then able to force the arms 16 to retract.

In an alternative embodiment of the drill 10, as shown in Figure 8 an alternative method of causing the guide means 25 to be drawn up within the drill body 11 is utilised. In this embodiment a screw thread 50 is cut into the shank 26 of the guide means 25 rather than in the wedge portion 27 and a co-operating thread 51 is cut into the walls of the bore 13. At the end of the extending means 35 there is a friction bar 54 which can be flat or preferably pointed in the same shape as the end of the drill used to drill the original cylindrical bore or it can be in the form of a plurality of bars as shown in Figure 5 or 6. Obviously the different type of friction bars can applied to any of the drill embodiments.

In operation this modified drill 10 acts in the same way as that described with reference to Figures 5, 6 and 7 and the relative movement between the guide means 25 and drill 10 causes the shank 26 to screw along the bore 13 thus causing the wedge 27 to be drawn up within the cutting end 14 of the drill body 11.

When the driving means are reversed to drive the drill 10 in the reverse direction, the screw thread on the guide means 25 unscrews along the bore 13 allowing it to return to the position protruding from the drill body 11.

The screw thread 50 extends along a portion of the length of the shank 26. A dust seal 57 may be positioned between the thread 50 and the frusto-conical guide 27 in the form of a single tooth or other suitable means.

Also in this embodiment of the drill 10 it can be seen that other modifications may be made. For example a bore 55 may be drilled in the shank 12 of the drill 10, and a slot 56 cut in the end of the shank 26 of the guide means 25. Thus a screw driver may be inserted into the bore 55 to turn the guide means 25 manually if the device gets stuck.

A further modified embodiment of the drill 10 is shown in Figure 9. In this embodiment the arms 16 are located within closed end slots 60 in the drill body 11.

## Claims

1. An expansible drill (10) for undercutting holes comprising a drill body (11), at least one radially extending arm (16) attached at one end by hinge means (19) to the drill body such that the arm is pivotable radially outwards, cutting means (18) formed on said arm, guide means (26, 27) for moving said arm radially outwards, said guide means being movable axially relative to said drill body, the guide means comprising a shank portion (26) and a frusto-conical wedge means (27), means (20) for holding the arm in contact with the guide means and means for moving the guide means axially relative to the drill, wherein the arm is caused to pivot radially outwards forming an increasing cutting diameter as said arm moves along the divergent surface of the guide means, characterised in that the guide means (26, 27) and drill body (11) are free to rotate relative to each other and the means for moving the guide means axially relative to the drill comprise co-operating engagement means (48, 49 or 51,) one element of which is located on the guide means and another on the drill body, at least one element of which engagement means is a screw thread.

2. An expansible drill (10) as claimed in claim 1 in which there are a pair of arms (16) oppositely disposed within slots (15) cut axially in the said end of the drill body (11).

3. An expansible drill (10) as claimed in claim 1 and claim 2 in which the guide means is axially movable within a bore in the drill body.

4. An expansible drill (10) as claimed in any one of the preceding claims further comprising means (46, 47) for preventing rotation of the guide means (26, 27) when the drill body (11) is being rotated.

5. An expansible drill (10) as claimed in claim 4 in which the rotation preventing means (46, 47) include means for increasing the friction between the end of the guide means (26, 27) and a blind end of a hole being undercut.

6. An expansible drill (10) as claimed in claim 5 in which the friction increasing means comprise at least one bar (46, 47) projecting from the end of the guide means.

7. An expansible drill (10) as claimed in any one of the preceding claims in which the means for moving the guide means axially relative to the drill body comprise tooth means (49) formed on the inner surface of said arm or arms (16) and thread means (48) formed on a frustoconical wedge (27), the tooth means being held in engagement with the thread means.

8. An expansible drill (10) as claimed in any one of claims 1 to 6 in which the means for moving the guide means comprise thread means (51) formed on the inner surface of the drill body (11) and co-operating thread means (50) formed on the shank portion (26) of the guide means in engagement with the aforementioned thread means.

## Patentansprüche

1. Aufweitbarer Bohrer (10) zum Hinterschneiden von Löchern, umfassend einen Bohrerkörper (11), wenigstens einen sich radial erstreckenden Arm (16), der an einem Ende durch Gelenkmittel (19) an dem Bohrerkörper derart angebracht ist, daß der Arm nach radial außen schwenkbar ist, an dem Arm ausgebildete Schneidemittel (18), Führungsmittel (26, 27) zum Bewegen des Arms nach radial außen, wobei die Führungsmittel axial bezüglich des Bohrerkörpers beweglich sind, die Führungsmittel umfassend einen Schaftabschnitt (26) und ein kegelstumpfförmiges Keilmittel (27), Mittel (20) zum Halten des Arms in Kontakt mit den Führungsmitteln und Mittel zum Bewegen der Führungsmittel axial bezüglich des Bohrers, wobei bewirkt wird, daß der Arm nach radial außen unter Bildung eines mit einer Bewegung des Arms längs der divergierenden Oberfläche der Führungsmittel zunehmenden Schneiddurchmessers schwenkt,
**dadurch gekennzeichnet,**
daß die Führungsmittel (26, 27) und der Bohrerkörper (11) frei gegeneinander drehbar sind und die Mittel zum Bewegen der Führungsmittel axial bezüglich des Bohrers Zusammenwirkungseingriffsmittel (48, 49 oder 51) umfassen, von denen ein Element auf den Führungsmitteln angeordnet ist und ein weiteres auf dem Bohrerkörper, wobei wenigstens ein Element der Eingriffsmittel ein Schraubengewinde ist.

2. Aufweitbarer Bohrer (10) nach Anspruch 1, bei dem ein Paar von Armen (16) in axial in das eine Ende des Bohrerkörpers (11) geschnittenen Schlitzen gegenüberliegend angeordnet ist.

3. Aufweitbarer Bohrer (10) nach Anspruch 1 und 2, bei dem die Führungsmittel in einer Bohrung in dem Bohrerkörper axial beweglich sind.

4. Aufweitbarer Bohrer (10) nach einem der vorhergehenden Ansprüche, ferner umfassend Mittel (46, 47) zum Verhindern der Rotation der Führungsmittel (26, 27), wenn der Bohrerkörper (11) gedreht wird.

5. Aufweitbarer Bohrer (10) nach Anspruch 4, bei dem die Rotationsverhinderungsmittel (46, 47) Mittel zur Erhöhung der Reibung zwischen dem Ende der Führungsmittel (26, 27) und einem blinden Ende eines Lochs, das hinterschnitten wird, umfassen.

6. Aufweitbarer Bohrer (10) nach Anspruch 5, bei dem die Reibungserhöhungsmittel wenigstens einen über das Ende der Führungsmittel vorstehenden Stab (46, 47) umfassen.

7. Aufweitbarer Bohrer (10) nach einem der vorhergehenden Ansprüche, bei dem die Mittel zum Bewegen der Führungsmittel axial bezüglich des Bohrerkörpers auf der Innenfläche des Arms oder der Arme (16) ausgebildete Zahnmittel (49) und auf einem kegelstumpfförmigen Keil (27) ausgebildete Gewindemittel (48) umfassen, wobei die Zahnmittel in Eingriff mit den Gewindemitteln gehalten werden.

8. Aufweitbarer Bohrer (10) nach einem der Ansprüche 1 bis 6, bei dem die Mittel zum Bewegen der Führungsmittel auf der Innenfläche des Bohrerkörpers (11) ausgebildete Gewindemittel (51) und auf dem Schaftabschnitt (26) der Führungsmittel ausgebildete, in Eingriff mit den oben genannten Gewindemitteln stehende Zusammenwirkungsgewindemittel (50) umfassen.

## Revendications

1. Foret expansible (10) pour creuser des trous, comprenant un corps de foret (11), au moins un bras radialement écartable (16) fixé à une extrémité par des moyens de fixation à charnière (19) au corps du foret, de telle sorte que le bras peut être pivoté radialement et extérieurement, des moyens de coupe façonnés sur ledit bras, des moyens de guidage (26, 27) pour actionner ledit bras radialement vers l'extérieur, lesdits moyens de guidage étant mobiles axialement par rapport audit corps de foret, les moyens de guidage comprenant une partie tubulaire (26) et un moyen de coincement tronconique (27), un moyen (20) pour maintenir le bras en contact avec les moyens de guidage et un moyen pour déplacer les moyens de guidage axialement par rapport au foret, dans lequel le bras est adapté à pivoter radialement vers l'extérieur, formant un diamètre de coupe croissant à mesure que ledit bras se déplace le long de la surface divergente des moyens de guidage,
caractérisé en ce que les moyens de guidage (26, 27) et le corps du foret (11) peuvent tourner librement l'un par rapport à l'autre, et en ce que les moyens permettant le déplacement des moyens de guidage axialement par rapport au foret comprennent des moyens d'engagement (48, 49 ou 51) coopérants dont l'un des éléments est situé sur les moyens de guidage et un autre sur le corps de foret, un élément au moins desdits moyens d'engagement étant un filetage.

2. Foret expansible (10) selon la revendication 1, comprenant une paire de bras (16) placées opposées l'une par rapport à l'autre dans des encoches (15) découpées axialement dans ladite extrémité du corps de foret (11).

3. Foret expansible (10) selon les revendications 1 et 2, dans lequel le moyen de guidage est mobile axialement dans un alésage dans le corps du foret.

4. Foret expansible (10) selon l'une quelconque des revendications précédentes, comprenant en outre des moyens (46, 47) pour empêcher la rotation des moyens de guidage (26, 27) lorsque le corps du foret (11) est en rotation.

5. Foret expansible (10) selon la revendication 4, dans lequel les moyens d'empêcher la rotation des moyens de guidage (46, 47) comprennent des moyens pour augmenter de la friction entre l'extrémité des moyens de guidage (26, 27) et l'extrémité borgne d'un trou en cours de découpage.

6. Foret expansible (10) selon la revendication 5, dans lequel les moyens permettant l'augmentation de la friction comprennent au moins une barre (46, 47) en saillie à partir de l'extrémité des moyens de guidage.

7. Foret expansible (10) selon l'une quelconque des revendications précédentes, dans lequel les moyens permettant le déplacement axial des moyens de guidage par rapport au corps du foret comprennent un système de dents (49) placées sur la surface interne dudit ou desdits bras (16) et un filetage (48) pratiqué sur un coin tronconique, le système de dents étant maintenu engagé avec le système de filetage.

8. Foret expansible (10) selon l'une quelconque des revendications 1 à 6, dans lequel les moyens permettant le déplacement des moyens de guidage comprennent un système de filetage (51) formé sur la surface interne du corps de foret (11) et un système de filetage (50) coopérant formé sur la partie tubulaire (26) des moyens de guidage et engagé avec le système de filetage précédent.
